(19) Europäisches Patentamt
European Patent Office
Office européen des brevets

(11) **EP 2 193 387 B1**

(12) **EUROPEAN PATENT SPECIFICATION**

(45) Date of publication and mention
of the grant of the patent:
**11.05.2016 Bulletin 2016/19**

(51) Int Cl.:
*G01S 19/21* *(2010.01)*     *G01S 5/10* *(2006.01)*

(21) Application number: **08788566.1**

(22) Date of filing: **11.09.2008**

(86) International application number:
**PCT/GB2008/003057**

(87) International publication number:
**WO 2009/040500 (02.04.2009 Gazette 2009/14)**

(54) **INTERFERENCE POWER MEASUREMENT**

STÖRUNGSLEISTUNGSMESSUNG

MESURE DE PUISSANCE D'INTERFÉRENCE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.09.2007 GB 0719004**

(43) Date of publication of application:
**09.06.2010 Bulletin 2010/23**

(73) Proprietor: **QinetiQ Limited
Farnborough
Hampshire GU14 0LX (GB)**

(72) Inventors:
• **SHEMAR, Setnam, Lal
Malvern
Worcestershire WR14 3PS (GB)**
• **GRIFFIN, Christopher
Malvern
Worcestershire WR14 3PS (GB)**

(74) Representative: **Loughrey, Paul Francis et al
QinetiQ Limited
Intellectual Property Department
St. Andrews Road
Malvern, Worcestershire WR14 3PS (GB)**

(56) References cited:
US-A- 5 008 679        US-A1- 2004 176 909
US-A1- 2004 257 275

• GRIFFIN C ET AL: "Interferometric
radio-frequency emitter location" IEE
PROCEEDINGS: RADAR, SONAR &
NAVIGATION, INSTITUTION OF ELECTRICAL
ENGINEERS, GB, vol. 149, no. 3, 3 June 2002
(2002-06-03), pages 153-160, XP006018390 ISSN:
1350-2395

**Description**

This invention relates to interference power measurement, and more particularly (although not exclusively) to interference power measurement over a wide or global coverage area in connection with facilitating satellite-implemented navigation such as in a Global Navigation Satellite System (GNSS).

In recent years, there has been a large growth in applications of satellite implemented navigation using the Global Positioning System (GPS). Although GPS is a military system controlled by the US Department of Defense, the vast majority of applications used around the world are now in the civil field. The ease and low cost of using a Global Navigation Satellite System (GNSS) receiver as demonstrated by GPS has resulted in development of an independent European system, GALILEO. Civil applications include mobile phone services, aviation and road-user charging.

Satellite navigation systems such as GPS or GALILEO are unfortunately vulnerable to interference because satellite downlink signals are comparatively weak when received by ground-based or airborne receivers: a user's GNSS receiver may cease to be effective as a navigation aid if a transmitter generates a signal causing interference with a GNSS signal.

The present invention provides a method as defined in claim 1.

The invention enables transmitters causing serious interference to be located, and facilitates implementation of appropriate countermeasures.

In the method of the invention, the quadratic equation may be:

$$P_I^2\left[\frac{2TG_s^2\left(\frac{\lambda}{4\pi D_1}\right)^2\left(\frac{\lambda}{4\pi D_2}\right)^2}{SNR_C B(kT_N)^2}\right] - P_I\left[\frac{G_s\left(\frac{\lambda}{4\pi D_1}\right)^2 + G_s\left(\frac{\lambda}{4\pi D_2}\right)^2}{kT_N B}\right] - 1 = 0$$

where

$P_1$ is the interfering transmitter's signal power in W;

$D_1$ and $D_2$ are respectively the distances in m between the interfering transmitter and monitoring stations employed in geolocation of the interfering transmitter;

$\lambda$ is the wavelength in m of the interfering transmitter's signal;

$G_s$ is each of the monitoring stations receive antenna gain (assumed to be equal);

$T$ is an integration time in s, i.e. the time over which a correlation operation is performed as part of a process of locating an interfering transmitter (as will be described later);

$k$ *is* Boltzmann's constant, $1.380662 \times 10^{-23}$ JK$^{-1}$;

$T_N$ is the total system noise temperature of each satellite's on-board receiver system and antenna;

$SNR_c$ is a signal-noise-ratio of a correlation peak obtained in the correlation operation; and

$B$ is a sample bandwidth in Hz at each satellite's receiver ADC output, where ADC means analogue to digital converter.

It is assumed that the interfering transmitter has an antenna with a gain of 0 dBi (equivalent to a numerical value of 1) corresponding to an omni-directional antenna.

A GNSS receiver may be used to supply navigation information to a user, and to provide the user with an indication of transmitter interference. The method may include providing a user with an indication of a geographical area or areas of denial in which the GNSS receiver ceases to be an effective navigation aid. The indication of a geographical area of denial may be used to derive a location at which or a route over which the receiver may be used. The receiver's position, velocity and time and mitigation information may be determined to mitigate effects of interference by controlling the receiver's reception characteristics. The receiver may have a band stop filter and a nulling antenna and the mitigation information may be for controlling the band stop filter's frequency and the antenna's null direction. The GNSS receiver may be a navigation aid in a vehicle, e.g a remotely guided unmanned vehicle such as a torpedo or an airborne missile.

The method of the invention may include an additional step of using the interfering transmitter power and its location to control power and direction of spot-beams from GNSS satellites in order to increase signal power received by a receiver experiencing interference. Each GNSS satellite may have a high-gain narrow-beam antenna for generating a high-power spot-beam centred on the location of the interfering transmitter.

In another aspect, the present invention provides an apparatus as defined in claim 10.

In the apparatus of the invention, the quadratic equation may be:

$$P_I^2 \left[ \frac{2TG_S^2 \left(\frac{\lambda}{4\pi D_1}\right)^2 \left(\frac{\lambda}{4\pi D_2}\right)^2}{SNR_C B(kT_N)^2} \right] - P_I \left[ \frac{G_S\left(\frac{\lambda}{4\pi D_1}\right)^2 + G_S\left(\frac{\lambda}{4\pi D_2}\right)^2}{kT_N B} \right] - 1 = 0$$

where terms are as previously defined.

The apparatus may include a GNSS receiver arranged to supply navigation information to a user, and to provide the user with an indication of transmitter interference. It may be arranged to provide a user with an indication of one or more geographical areas of denial in which the GNSS receiver ceases to be an effective navigation aid. It may also be arranged to control the receiver's reception characteristics to mitigate effects of interference and to determine the receiver's position, velocity and time. The receiver may have a band stop filter and a nulling antenna and the receiver's reception characteristics may correspond to the band stop filter frequency and its antenna null direction. The GNSS receiver may be a navigation aid in a vehicle, e.g. a remotely guided unmanned vehicle such as a torpedo or an airborne missile.

The apparatus may be arranged such that power and beam direction of spot-beams from GNSS satellites are controllable in response to interfering transmitter signal power and location in order to increase GNSS signal power received by the receiver. Each GNSS satellite may have a high-gain narrow-beam antenna for generating a spot-beam centred on the interfering transmitter's location.

In order that the invention might be more fully understood, embodiments thereof will now be described below by way of example only, with reference to the accompanying drawings, in which:-

Figure 1     schematically illustrates a transmitter causing interference with a GNSS navigation signal and detectable via two satellites;

Figure 2     is a block diagram of processing carried out inside a GNSS receiver used as a navigation aid in an embodiment of the invention;

Figure 3     illustrates rerouting a vehicle using GNSS navigation to avoid a zone of interference;

Figure 4     illustrates use of high-power spot-beams on-board GNSS satellites to mitigate the effect of interference; and

Figure 5     is a schematic drawing illustrating use of aircraft-borne apparatus in geolocating a source or sources of interference.

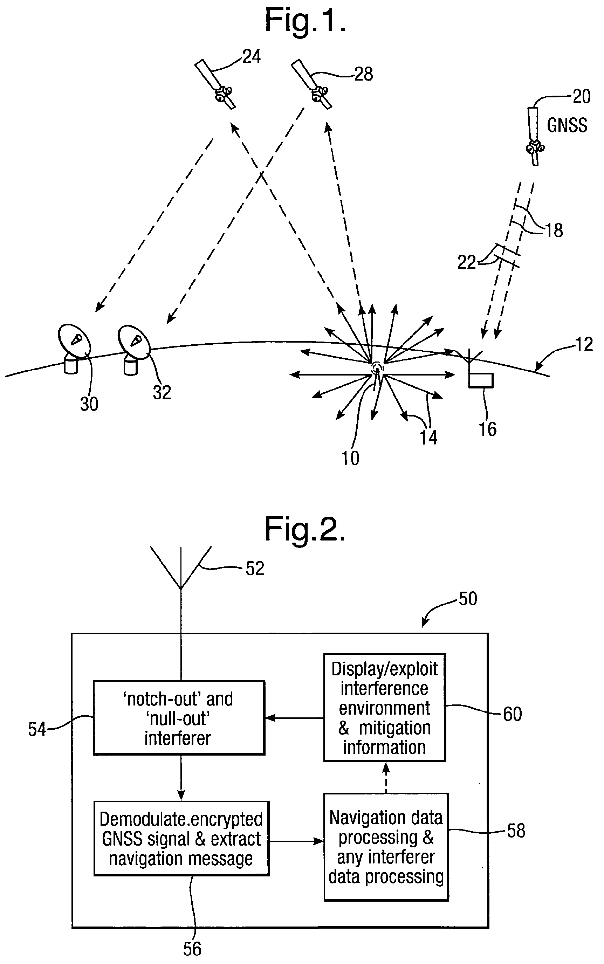

Referring to Figure 1, a transmitter 10 on the surface of the earth 12 produces an omni-directional radiation pattern indicated by arrows such as 14. A receiver 16, also on the surface of the earth 12, is receiving a navigation signal indicated by arrowed chain lines 18 from a Medium Earth Orbit (MEO) navigation satellite 20 of the GNSS. The radiation 14 from the transmitter 10 is received by the receiver 16 causing interference with the GNSS navigation signal 18: the interference is sufficient to cause the receiver 16 to fail to detect the GNSS navigation signal 18, as indicated by strike-out lines 22.

Radiation from the ground-based transmitter 10 also passes to two intercept satellites 24 and 28 in geostationary orbit (GEO) although they may alternatively be in Low Earth Orbit (LEO) or Medium Earth Orbit (MEO) or a combination of these. The satellites 24 and 28 are monitoring stations which are in line of sight to the transmitter 10, and they each intercept some of the radiation from the transmitter 10 as an uplink. Two ground-based receivers 30 and 32 monitor signals relayed to them via the satellites 24 and 28 respectively. The receivers 30 and 32 are shown as ground-based for illustrational clarity, but they may alternatively be on board the satellites 24 and 28, and this alternative is assumed to be the case for the purposes of calculation later.

Geolocation of a ground-based transmitter 10 using two satellites 24 and 28 is known. In IEEE Trans. on Aerospace and Electronic Systems, Vol. AES-18, No. 2, March 1982, P C Chestnut discloses locating such a transmitter from time difference of arrival (TDOA) and/or frequency difference of arrival (FDOA) of replicas of signals from the transmitter relayed along independent signal paths to receivers. TDOA and FDOA are also referred to as differential time offset (DTO) and differential frequency offset (DFO) or differential Doppler. Determination of DTO and DFO is described in IEEE Trans. on Acoustics Speech and Signal Processing, Vol. ASSP-29, No. 3, June 1981 by S Stein in "Algorithms for Ambiguity Function Processing". It involves correlating received signals with trial time shifts and frequency offsets relative to one another. The time shift and frequency offset which maximise the correlation are the required DTO and DFO, subject to correction for time delays and frequency shifts introduced in satellites between uplink and downlink. From the DTO and DFO, a transmitter location on the surface of the Earth can be determined (geolocated) as disclosed in US Pat. No 5,008,679. Multiple values of DTO or DFO determined at different times may be used instead of both DTO and DFO. US Pat. No. 6,018,312 discloses geolocation using a phase coherent reference signal. US Pat. No. 6,618,009 relates to geolocation with time-varying DTO and DFO, and US Pat. No. 6,677,893 to geolocation of a frequency agile transmitter.

In order to achieve detection and geolocation, each of the satellites 24 and 28 must have on board one of the following:

(i) a transparent transponder with (a) a range of uplink frequencies that span GNSS frequency bands and (b) downlink frequencies outside those frequency bands for relaying data to separate ground-based receivers for data processing, or

(ii) receivers with a range of uplink frequencies that span GNSS frequency bands together with on-board hardware for digitising, exchanging data between satellites and data processing: in this case, detection, location and other processing may be achieved on board the satellites without the use of ground-based systems, or

(iii) receivers with a range of uplink frequencies that span GNSS frequency bands together with on board hardware for digitising and relaying the digitised data to ground-based receivers for data processing.

Signals received from the transmitter 10 at the ground-based receivers 30 and 32 via the satellites 24 and 28 are processed to geolocate the transmitter 10 as described in US Pat. No. 6,018,312 for example. This involves digitising and recording the signals received at 30 and 32 before correlating them with one another with relative offsets in time and frequency: it is referred to as cross-ambiguity function (CAF) processing. A range of trial values of each of the time and frequency offsets is applied between the signals, and a correlation power peak is obtained for trial values corresponding to actual DTO and DFO values. The CAF $A(\tau,v)$ is defined by Equation (1):

$$A(\tau,v) = \int_0^T s_1(t)s_2^*(t+\tau)e^{-2\pi i v t}dt \qquad (1)$$

where $s_1$ and $s_2$ are the complex envelopes of two signals that contain a common component, the asterisk denotes a complex conjugate, $\tau$ and V. are trial values of DTO and DFO respectively, and T is integration time. The modulus $|A(\tau,v)|$ of the CAF defines a surface referred to as the 'Ambiguity Surface': a correlation peak in the Ambiguity Surface indicates a signal from a transmitter 10 producing interference that is intercepted by the satellites 24 and 28. The values of DTO and DFO enable the location of a transmitter 10 on the surface of the earth to be calculated. Multiple correlation peaks on the Ambiguity Surface indicate signals from multiple transmitters. Such peaks can be identified using known mathematical techniques. Values of DTO and DFO for each peak enable the location of each transmitter to be calculated.

CAF processing achieves a correlation peak for a transmitter with a signal to noise ratio (SNR) $SNR_c$. This is dependent on linear SNR values $SNR_1$ and $SNR_2$ at outputs of analogue to digital converters (ADCs) in each of the satellite receivers 30 and 32 and time-bandwidth product $2BT$ as shown in Equation (2) below:

$$SNR_c = \frac{2BT(SNR_1.SNR_2)}{(1 + SNR_1 + SNR_2)} \qquad (2)$$

Here $T$ is as previously defined; $B$ is a sample bandwidth in Hz at each satellite receiver's ADC output: it is the bandwidth within which the interfering transmitter signal must lie in order to be detected. Once the interfering transmitter signal is detected, in order to obtain accurate power measurement, the sample bandwidth should be set as closely as possible to the bandwidth of the interfering transmitter signal and should be centred on the centre frequency of the transmitter. The term $2BT$ is called the Processing Gain, PG. The magnitude of a correlation peak's $SNR_c$ is dependent upon the transmitter's signal power on the surface of the earth 12. Once the transmitter 10 has been detected it can be geolocated as previously described.

If an interfering transmitter's bandwidth is not known, it may be determined from the correlation peak's width provided that the bandwidth is smaller than the initial sample bandwidth at the outputs of the satellite receivers' ADCs; the interfering transmitter's centre frequency may be estimated by carrying out CAF processing of signals incrementally across a frequency band using smaller sample bandwidth intervals and identifying an interval showing a greatest correlation peak. Once the interfering transmitter's bandwidth and centre frequency are known, the sample bandwidth at the output of the ADCs should be set as close as possible to the bandwidth of the interfering transmitter signal to minimise noise components. Furthermore, the interfering transmitter's signal should lie within the sample bandwidth of the ADCs. The interfering transmitter can then be geolocated as previously described. Once an interfering transmitter has been detected and geolocated, its signal power on the surface of the earth is calculated from the correlation peak's $SNR_c$, which is a measured quantity. If signals are processed on board the satellites 24 and 28 (i.e. instead of by ground-based receivers 30 and 32), an interfering transmitter's equivalent power on the surface of the earth is calculated using Equation (2) as follows: it can be shown that, for an uplink from the interfering ground-based transmitter 10 to the satellites 24 and 28:

$$SNR_1 = \frac{P_I G_I G_S \left(\frac{\lambda}{4\pi D_1}\right)^2}{kT_N B} \tag{3}$$

and

$$SNR_2 = \frac{P_I G_I G_S \left(\frac{\lambda}{4\pi D_2}\right)^2}{kT_N B} \tag{4}$$

where

$P_1$ is the interfering transmitter's signal power in W;
$G_1$ is the gain in dBi of the interfering transmitter's antenna;
$D_1$ and $D_2$ are the distances in m between the interfering transmitter and the satellites 24 and 28 respectively;
$\lambda$ is the wavelength in m of the interfering transmitter's signal;
$G_s$ is the receive antenna gain of each of the satellites 24 and 28 (assumed to be equal gain);
$k$ is Boltzmann's constant, 1.380662 x 10$^{-23}$JK$^{-1}$;
$T_N$ is a total system noise temperature of each satellite's on board receiver system and antenna; and
$B$ is a sample bandwidth in Hz at each satellite's receiver ADC output.

It is assumed that the gain $G_I$ of the interfering transmitter's antenna, is 0 dBi (equivalent to a numerical value of 1) corresponding to an omni-directional antenna.

To simplify calculation, Equations (3) and (4) are calculated for the case where receivers are incorporated in the satellites, not as shown in Figure 1 where receivers 30 and 32 are on the ground.

Using Equations (3) and (4), Equation (2) may be rewritten by substituting for $SNR_1$ and $SNR_2$ as follows:

$$SNR_C = \frac{2BT\left[\dfrac{P_I G_S\left(\dfrac{\lambda}{4\pi D_1}\right)^2}{kT_N B} \times \dfrac{P_I G_S\left(\dfrac{\lambda}{4\pi D_2}\right)^2}{kT_N B}\right]}{1+\dfrac{P_I G_S\left(\dfrac{\lambda}{4\pi D_1}\right)^2}{kT_N B}+\dfrac{P_I G_S\left(\dfrac{\lambda}{4\pi D_2}\right)^2}{kT_N B}} \qquad (5)$$

Equation (5) may be transposed to a quadratic expression for the interfering transmitter's signal power $P_I$ as follows:

$$P_I^2\left[\frac{2TG_S^2\left(\dfrac{\lambda}{4\pi D_1}\right)^2\left(\dfrac{\lambda}{4\pi D_2}\right)^2}{SNR_C B(kT_N)^2}\right] - P_I\left[\frac{G_S\left(\dfrac{\lambda}{4\pi D_1}\right)^2 + G_S\left(\dfrac{\lambda}{4\pi D_2}\right)^2}{kT_N B}\right] - 1 = 0 \qquad (6)$$

In Equation (6), parameters are as defined for Equation (2): of these, satellite receive antenna gain $G_S$, integration time $T$, transmission wavelength $\lambda$ and total system noise temperature $T_N$ are obtainable system parameters; the interfering transmitter's bandwidth may be used to set the sample bandwidth $B$ at the satellite receivers' ADC outputs, the distances $D_1$ and $D_2$ between the interfering transmitter and the satellites 24 and 28 are determined by geolocation of the transmitter 10 as described earlier, and $k$ is known. Consequently Equation (6)'s expressions in square brackets may be evaluated and Equation (6) can be solved for two values of $P_I$: one of these values will be negative and the other positive, and the positive value is the correct solution for $P_I$.

In order to identify a correlation peak unambiguously, the peak should significantly exceed background noise, which causes spurious correlations. Consequently, it is desirable to have a minimum value of $SNR_C$ of at least 20 dB, and this minimum value sets the minimum interfering transmitter signal power that can be measured. There may be a significant amount of variability between individual measurements of $SNR_C$, typically a few dB. An average value of $SNR_C$ obtained from a number of individual measurements enables a more accurate value of the interfering transmitter's signal power $P_1$ to be measured. Using data from several measurements, especially where the satellite positions vary significantly, would also benefit resolution of position fix ambiguities in the presence of multiple peaks.

For satellites using transparent transponders to provide a downlink relaying signals to ground-stations for ground-based signal-processing, the SNR of the downlink may also be taken into account in the calculation of $P_1$. Extension of the analysis of Equations (2) to (6) to achieve this is straightforward and will not be described.

The embodiment described above may be implemented to operate continuously in order to provide an automatic and real-time (or near-real-time) operational system which monitors a wide or global area to detect one or more interfering transmitters.

A transmitter causes interference in a volume of space around it extending radially to a distance from the transmitter at which its signal power passes from sufficient to insufficient to cause serious interference. A GNSS receiver in such a volume of space is therefore within an interference environment which deleteriously affects its performance sufficiently to cause it to cease to be effective as a navigation aid. The interference environment might cause receiver failure as a result of inability to lock on to enough GNSS signals. The receiver is provided with a value of the Interferer-to-Signal Ratio (ISR) at the receiver's location and defined (in dB) as:

$$ISR = P_I + G_I - 20\log\left[\frac{4\pi d}{\lambda}\right] + G_R - S \qquad (7)$$

where S is the strength of the GNSS signal on the earth's surface, d is the distance between the interfering transmitter and the GNSS receiver, $G_R$ is the antenna gain of the GNSS receiver and other terms are as defined earlier. A GNSS receiver has a critical value $ISR_C$ of ISR that can be tolerated before the receiver fails, and $ISR_C$ is predetermined.

In this embodiment $ISR_C$ is made available for computations as a parameter stored within the GNSS receiver. It is used in Equation (8) below to determine how far the receiver needs to be from a transmitter causing interference in order to avoid failure. Equation (8) is a rearranged version of Equation (7) to express d in terms of the other parameters: here d is replaced by the minimum distance $d_{min}$ required between the interfering transmitter and the GNSS receiver to avoid GNSS receiver failure, and consequently the critical value $ISR_C$ is substituted for $ISR$.

$$d_{min} = \frac{\lambda}{4\pi} \times \log^{-1}\left[ \frac{1}{20}(P_I + G_I - S + G_R - ISR_C) \right] \qquad (8)$$

Once a value of $d_{min}$ has been obtained, this value defines a geographical area of denial on the surface of the earth as well as a three dimensional geographical volume of denial around the transmitter that can also be determined: here denial indicates denial of GNSS receiver capability.

Figure 2 illustrates an embodiment of the invention in which processing is carried out inside a GNSS receiver 50 used as a navigation aid. The receiver 50 has a multi-element antenna 52 for receiving downlink signals from a satellite (not shown). A first stage of processing 54 includes a front-end band stop (notch) filter to attenuate an interference signal at a predetermined frequency: this reduces the effect of a continuous wave or narrow band interfering transmitter. Such filtering may be implemented at radio frequency (RF) and/or intermediate frequency (IF) as convenient. This stage is also capable of configuring the antenna's radiation pattern so that it has a null (-zero or low receive sensitivity) in the direction of a transmitter causing interference. This requires the antenna 52 to be one which can at least partially 'null-out' a received interference signal. A band stop filter and nulling antenna are not essential but may improve performance if available.

The interfering transmitter's location, signal power $P_1$, and other relevant information including its bandwidth and centre frequency are up-linked to GNSS satellites for onward transmission to GNSS receivers within, for example, a GNSS navigation message. This information may also be provided to a GNSS receiver using an alternative communications link of appropriate kind. Once this information is received, the GNSS receiver processes it to determine an interference environment which that receiver will experience, and results from this are fed back to control the first stage of processing 54 as described later.

A second stage of processing 56 demodulates the GNSS signal, which is encrypted to prevent spoofing, and decrypts it to derive a navigation message: this message includes location information, i.e. latitude and longitude of a transmitter causing interference, together with the interference signal's centre frequency and bandwidth corresponding to a given time. Use of encryption is possible with a certain type of GPS receiver that acquires encrypted GPS codes to provide an anti-spoofing capability. In future, use of encrypted signals should also be possible within receivers of other GNSS.

A third stage of processing 58 carries out interference data processing using the information given in the navigation message. This stage may also involve navigation data processing to obtain the user's position.

Results from earlier processing stages 54 to 58, including the receiver's Position, Velocity and Time (PVT), are used in a fourth processing stage 60 to determine the receiver's interference environment and information to mitigate the effects of the interference signal: the mitigation information is fed back to the first stage 54 to control the receiver's reception characteristics, i.e. its band stop filter frequency and antenna null direction. The interference environment may be displayed on the GNSS receiver display to warn a user and provide awareness of the situation regarding interference, including a geographical area of denial in which the receiver ceases to be an effective navigation aid. This may be used to inform the location at which, or route over which, the receiver is used.

The interference environments for different types of GNSS receivers may be determined as part of GNSS system operations rather than inside a GNSS receiver. For example, a terrain database could be used in combination with radio propagation modelling techniques to more accurately and reliably determine the geographical areas of denial of one or more transmitters using the transmit powers and locations of the one or more transmitters. Appropriate values of $ISR_C$ would also be used for determining the interference environment for different types of GNSS receivers. This interference environment information could then be provided to a GNSS receiver using the GNSS navigation message rather than the more basic information of transmitter powers and locations. This would remove the requirement to determine the interference environment in the fourth stage described above as this information would be obtained directly from the demodulated GNSS navigation message.

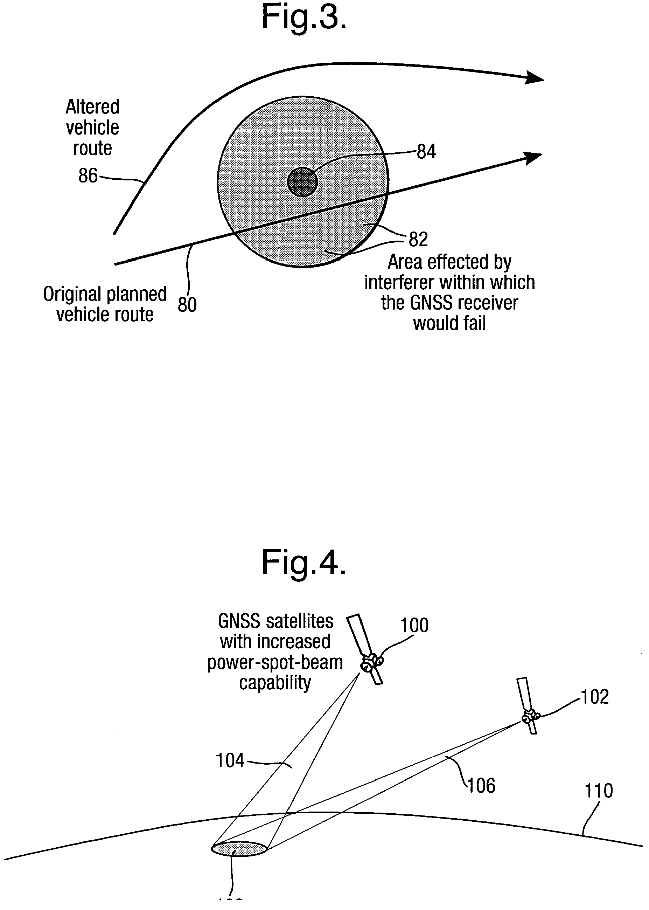

Referring now to Figure 3, an originally planned vehicle route indicated by an arrow 80 extends through a zone 82 in which a transmitter 84 generates sufficiently powerful interference to cause a GNSS receiver to cease to be useful to guide the vehicle's navigation. With the aid of knowledge of the interference environment provided by the GNSS receiver, i.e. the extent of the zone 82, the vehicle can be rerouted over a second route 86 which circumnavigates the zone 82 without entering it: this allows the vehicle to retain uninterrupted access to GNSS navigation information. The invention is relevant for example, to vehicle navigation in a major city with an orbital motorway, autobahn, freeway etc.: on the M25 motorway around London, England, if a transmitter caused interference in western London, a road vehicle using a GNSS receiver for navigation could be routed around the eastern part of the M25 avoiding the problem.

The invention is not restricted to road vehicles or manned vehicles. It may also be used with manned or unmanned ships and aircraft, and munitions such as torpedoes and airborne missiles which are remotely guided using GNSS or the global positioning system (GPS).

Figure. 4 illustrates a further embodiment of the invention which uses the GNSS system itself to mitigate the effect of interference. Two GNSS satellites 100 and 102 have respective on board, high-gain, narrow beam antennas (not shown) generating spot-beams 104 and 106 which are superimposed on one another at 108 on the surface of the earth 110. Once a transmitter's location and power have been determined by geolocation, the satellites 100 and 102 radiate higher power GNSS signals to a relatively small area of denial shown as 108. The size of the area of denial is determined using $d_{min}$, calculated from Equation (8). The spot-beams 104 and 106 cover the area of denial and are centred on the location of an interfering transmitter. If the higher strength GNSS signals resulting from the spot-beams 104 and 106 give rise to a value of $ISR$ within the area of denial lower than or equal to the critical value $ISR_C$ above which a GNSS receiver fails, the GNSS receiver will be able to acquire GNSS signals and operate again. A minimum increase in GNSS signal power, $\Delta S$, required in the area of denial on the earth's surface is given (in dB) by Equation (9):

$$\Delta S = (I\text{-}S) - ISR_c \qquad\qquad (9)$$

where $I$ is the interfering transmitter power and S is the original GNSS signal power on the surface of the earth.

This embodiment may provide a wide-area or global automatic interference mitigation technique: i.e. on detection of an interfering transmitter, its location, transmit power and size of area of denial may be determined and used to provide information to the GNSS regarding location, size and power of spot-beam required to mitigate its effect. Such information would enable the GNSS to provide automatic mitigation of interference on user receivers. It facilitates accurate and time-efficient application of spot-beams, enabling improved satellite energy efficiency, as spot-beams require high power. It may also be applied to multiple transmitters using multiple spot-beams.

Aircraft may also be used as monitoring stations for geolocating a source or sources of interference: the aircraft may be manned or unmanned air vehicles (UAVs). Aircraft may be an alternative or an addition to satellites: i.e. satellites and aircraft may be used together, or alternatively either one may be used instead of the other. Satellites provide an advantage in that they give regional and global coverage, whereas aircraft provide only area coverage (albeit wide area coverage). Against this, UAVs provide flexibility in that they might be available for use before an appropriate satellite constellation becomes available.

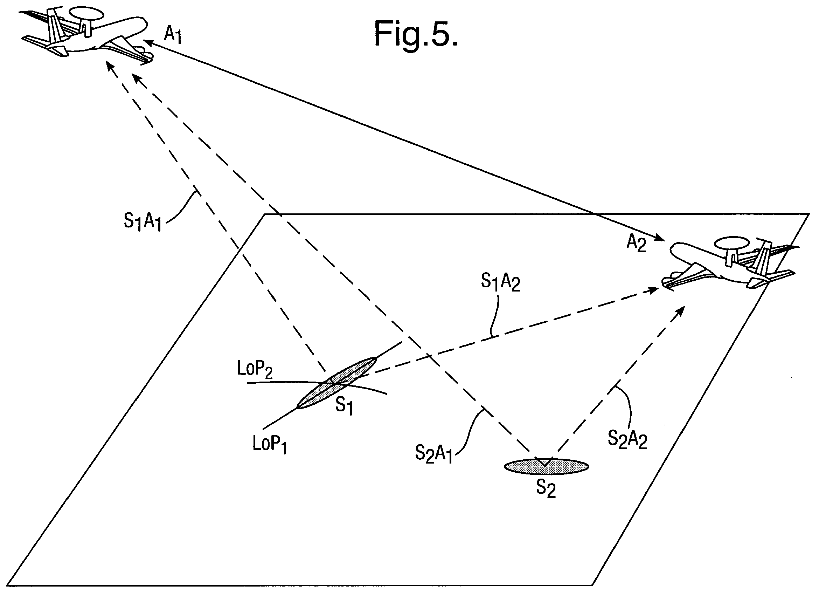

Referring now to Figure 5, two aircraft $A_1$ and $A_2$ are shown locating interference sources $S_1$ and $S_2$ by obtaining intersecting lines of position. The drawing shows only one pair of intersecting lines of position $LoP_1$ and $LoP_2$, which locate source $S_1$. The sources $S_1$ and $S_2$ are shown as ellipses, which denote uncertainties in their respective locations determined by the geolocation technique described earlier. Lines of sight from the centres of the ellipses $S_1$ and $S_2$ to the aircraft $A_1$ and $A_2$ are indicated by arrowed chain lines $S_1A_1$, $S_1A_2$, $S_2A_1$ and $S_2A_2$.

The number of aircraft needed for geolocating an interferer depends on the interferer's type of signal and the availability or otherwise of one or more ground-based (terrestrial) intercept sites monitoring the interferer. Two aircraft may be effective against relatively broadband signals, or alternatively one aircraft and a terrestrial intercept site. However, three aircraft may be required against targets emitting relatively narrowband or CW signals, when Doppler alone has to be exploited. Alternatively, two aircraft and a terrestrial intercept site could be used in this case: one aircraft and two terrestrial intercept sites could also be used: however, antenna coverage is over a much more limited area for terrestrial antennas compared to airborne antennas.

As in the case of satellite-based location, in the aircraft-borne application the aircraft have apparatus to facilitate interferer location and wider aims of the invention: this apparatus includes:

(a) an antenna on each aircraft arranged to provide common coverage (i.e. coverage by both aircraft) of a terrestrial region of interest in which the interferer is situated; this region of common coverage may contain one or several interferers, and may extend to cover tens of kilometres to a few hundred kilometres;

(b) signal capture apparatus operating in conjunction with a highly stable time source and an on-board inertial navigation system (INS) for provision of aircraft positional information;

(c) a communications link between aircraft (e.g. between aircraft $A_1$ and $A_2$) in order to relay information to an aircraft designated as a signal processing platform which implements interferer location; and

(d) a communications link from the designated signal processing platform to relay location and interference information into the GNSS system.

## Claims

1. A method of deriving the power of a transmitter (10) causing interference by geolocating the transmitter using a correlation peak finding technique implemented by plurality of monitoring stations (24, 28) which are at least one of satellite-based and aircraft-based, the correlation peak finding technique comprising digitising and recording the signals received in the plurality of monitoring stations (24, 28) before correlating them with one another with relative offsets in time and frequency and **characterised in that** the method comprises deriving the power as a solution to a quadratic equation having coefficients which involve the transmitter's distances from the monitoring stations, correlation processing gain and correlation peak signal to noise ratio.

2. A method according to claim 1 further **characterised in that** the quadratic equation is:

$$P_I{}^2\left[\frac{2TG_S{}^2\left(\frac{\lambda}{4\pi D_1}\right)^2\left(\frac{\lambda}{4\pi D_2}\right)^2}{SNR_C B(kT_N)^2}\right] - P_I\left[\frac{G_S\left(\frac{\lambda}{4\pi D_1}\right)^2 + G_S\left(\frac{\lambda}{4\pi D_2}\right)^2}{kT_N B}\right] - 1 = 0$$

where

a) $P_1$ is the interfering transmitter's power in W;
b) $G_1$ is the gain in dBi of the interfering transmitter's antenna;
c) $D_1$ and $D_2$ are the distances in m between the interfering transmitter and two monitoring stations respectively;
d) $\lambda$ is the interfering transmitter's signal wavelength in m;
e) $G_S$ is the receive antenna gain of each of the monitoring stations (assumed to be equal gain);
f) $T$ is an integration time in s, i.e. the time over which a correlation operation is performed as part of a process of locating an interfering transmitter;
g) k is Boltzmann's constant, $1.380662 \times 10^{-23}$ $JK^{-1}$;
h) $T_N$ is a total system noise temperature of each satellite's on-board receiver system and antenna;
i) $SNR_c$ is a signal-noise-ratio of a correlation peak obtained in the correlation operation; and
j) $B$ is a sample bandwidth in Hz at each satellite's receiver ADC output, where ADC means analogue to digital converter.

3. A method according to claim 1 or 2 further **characterised in that** it includes using a Global Navigation Satellite System (GNSS) receiver (16) to supply navigation information to a user, and providing the user with an indication of transmitter interference.

4. A method according to claim 3 further **characterised in that** it includes providing a user with an indication of one or more geographical areas of denial (82) in which the GNSS receiver ceases to be an effective navigation aid.

5. A method according to claim 3 or 4 further **characterised in that** it includes determining the receiver's position, velocity and time and interference mitigation information to mitigate effects of interference by controlling the receiver's reception characteristics.

6. A method according to any one of claims 3 to 5 further **characterised in that** the GNSS receiver is a navigation aid in a remotely guided unmanned vehicle.

7. A method according to claim 3 further **characterised in that** the GNSS receiver is a navigation aid in a torpedo or an airborne missile.

8. A method according to claim 1 further **characterised in that** it includes the additional step of using measurements of transmitter signal power and transmitter location to control location, size and power of a spot-beam from a GNSS satellite (100, 102) to increase signal power received by a receiver experiencing interference.

9. A method according to claim 8 further **characterised in that** the satellite is a first satellite (100) and the method includes using at least one other GNSS satellite (102), the satellites having high-gain, narrow beam antennas to generate spot-beams (104, 106) centred on the location (108) of the transmitter.

10. Apparatus four deriving the power of a transmitter (10) causing interference, the apparatus comprising a plurality of monitoring stations (24, 28) which are at least one of satellite-based and aircraft-based, the monitoring stations (24, 28) being arranged to geolocate the transmitter by implementing a correlation peak finding technique by digitising and recording the signals received at the plurality of monitoring stations before correlating them with one another with relative offsets in time and frequency, and **characterised in that** the apparatus further comprises means for deriving the power as a solution to a quadratic equation having coefficients which involve the transmitter's distances from the monitoring stations (24, 28), correlation processing gain and correlation peak signal to noise ratio.

11. Apparatus according to claim 15 **characterised in that** the quadratic equation is:

$$P_I^2\left[\frac{2TG_S^2\left(\frac{\lambda}{4\pi D_1}\right)^2\left(\frac{\lambda}{4\pi D_2}\right)^2}{SNR_C B(kT_N)^2}\right] - P_I\left[\frac{G_S\left(\frac{\lambda}{4\pi D_1}\right)^2 + G_S\left(\frac{\lambda}{4\pi D_2}\right)^2}{kT_N B}\right] - 1 = 0$$

where

a) $P_1$ is the interfering transmitter's power in W;
b) $G_1$ is the gain in dBi of the interfering transmitter's antenna;
c) $D_1$ and $D_2$ are the distances in m between the interfering transmitter and two monitoring stations respectively;
d) $\lambda$ is the interfering transmitter's signal wavelength in m;
e) $G_s$ is the receive antenna gain of each of the monitoring stations (assumed to be equal gain);
f) $T$ is an integration time in s, i.e. the time over which a correlation operation is performed as part of a process of locating an interfering transmitter;
g) $k$ is Boltzmann's constant, $1.380662 \times 10^{-23}$ JK$^{-1}$;
h) $T_N$ is a total system noise temperature of each satellite's on-board receiver system and antenna;
i) $SNR_c$ is a signal-noise-ratio of a correlation peak obtained in the correlation operation; and
j) B is a sample bandwidth in Hz at each satellite's receiver ADC output, where ADC means analogue to digital converter.

12. Apparatus according to claim 11 further **characterised in that** it includes a GNSS receiver (16) arranged to supply navigation information to a user, and to provide the user with an indication of transmitter interference.

13. Apparatus according to claim 12 further **characterised in that** it is arranged to provide a user with an indication of one or more geographical areas of denial (82) in which the GNSS receiver ceases to be an effective navigation aid.

14. Apparatus according to claim 12 further **characterised in that** the GNSS receiver is a navigation aid in a remotely guided unmanned vehicle.

15. Apparatus according to claim 14 further **characterised in that** the remotely guided unmanned vehicle is a torpedo or an airborne missile.

16. Apparatus according to claim 10 further **characterised in that** it includes a GNSS satellite (100) with a spot-beam (104) having location, size and power which are controllable in response to measurements of a transmitter's power and location.

17. Apparatus according to claim 16 further **characterised in that** it includes at least one other GNSS satellite (102), the satellites (100, 102) having high-gain, narrow beam antennas for generating spot-beams (104, 106) centred on the location of the transmitter (108).

**Patentansprüche**

1. Verfahren zum Ableiten der Leistung eines Interferenz verursachenden Funksenders (10) durch Orten des Funksenders mithilfe einer Methode zum Auffinden des Korrelationsmaximums, welche von einer Vielzahl von Messstationen (24, 28) umgesetzt wird, von denen mindestens eine satellitenbasiert und mindestens eine luftfahrzeugbasiert ist, die Methode zum Auffinden des Korrelationsmaximums umfassend das Digitalisieren und Aufzeichnen der an der Vielzahl der Messstationen (24, 28) empfangenen Signale vor ihrem Korrelieren zueinander mit relativem Versatz in Bezug auf Zeit und Frequenz, und **dadurch gekennzeichnet, dass** das Verfahren das Ableiten der Leistung als eine Lösung einer quadratischen Gleichung umfasst, welche Koeffizienten aufweist, die die Entfernungen des Funksenders von den Messstationen, das Korrelieren der Verarbeitungsverstärkung sowie das Korrelieren des maximalen Signal-Rausch-Verhältnisses betreffen.

2. Verfahren nach Anspruch 1, ferner **dadurch gekennzeichnet, dass** die quadratische Gleichung wie folgt lautet:

$$P_I^2 \left[ \frac{2TG_s^2 \left( \frac{\lambda}{4\pi D_1} \right)^2 \left( \frac{\lambda}{4\pi D_2} \right)^2}{SNR_C B (kT_N)^2} \right] - P_I \left[ \frac{G_s \left( \frac{\lambda}{4\pi D_1} \right)^2 + G_s \left( \frac{\lambda}{4\pi D_2} \right)^2}{kT_N B} \right] - 1 = 0$$

wobei

    a) $P_1$ die Leistung des störenden Funksenders in W ist;
    b) $G_1$ der Antennengewinn der Antenne des störenden Funksenders in dBi ist;
    c) $D_1$ und $D_2$ die Entfernungen in m zwischen dem störenden Funksender und der jeweiligen der beiden Messstationen sind;
    d) $\lambda$ die Signalwellenlänge des störenden Funksenders in m ist;
    e) $G_s$ der Antennengewinn der Empfangsantenne einer jeden der beiden Messstationen ist (es wird ein gleicher Gewinn angenommen);
    f) $T$ eine Integrationszeit in s ist, d. h., die Zeitdauer, über die eine Korrelationsoperation als Teil eines Vorgangs des Ortens eines störenden Funksenders vorgenommen wird;
    g) $k$ die Boltzmann-Konstante $1{,}380662 \times 10^{-23}$ $JK^{-1}$ ist;
    h) $T_N$ die Gesamtrauschtemperatur des bordeigenen Empfangssystems und der bordeigenen Antenne eines jeden Satelliten ist;
    i) $SNR_C$ ein Signal-Rauschverhältnis eines in der Korrelationsoperation erhaltenen Korrelationsmaximums ist, und
    j) $B$ die Sample-Bandbreite in Hz am Empfänger-ADU-Ausgang jedes einzelnen Satelliten ist, wobei ADU eine Bezeichnung für Analog-Digital-Umsetzer ist.

3. Verfahren nach Anspruch 1 oder 2, ferner **dadurch gekennzeichnet, dass** es die Benutzung eines Globalen Navigationssatellitensystem- (GNSS-)Empfängers (16) umfasst, welcher einem Benutzer Navigationsinformationen liefert und dem Benutzer eine Indikation der Interferenz durch einen Funksender anzeigt.

4. Verfahren nach Anspruch 3, ferner **dadurch gekennzeichnet, dass** es die Anzeige einer oder mehrerer geographischer Verbotszonen (82) an den Benutzer umfasst, in welchen der GNSS-Empfänger nicht mehr als wirksame Navigationshilfe dienen kann.

5. Verfahren nach Anspruch 3 oder 4, ferner **dadurch gekennzeichnet, dass** es das Bestimmen von Position, Geschwindigkeit und Zeit des Empfängers sowie von Informationen zur Interferenzabschwächung umfasst, um die Auswirkungen von Störungen durch Steuerung der Empfangseigenschaften des Empfängers abzuschwächen.

6. Verfahren nach einem beliebigen der Ansprüche 3 bis 5, ferner **dadurch gekennzeichnet, dass** der GNSS-Empfänger eine Navigationshilfe in einem ferngesteuerten unbemannten Fahrzeug ist.

7. Verfahren nach Anspruch 3, ferner **dadurch gekennzeichnet, dass** der GNSS-Empfänger eine Navigationshilfe in einem Torpedo oder einem Flugkörper ist.

8. Verfahren nach Anspruch 1, ferner **dadurch gekennzeichnet, dass** es den zusätzlichen Schritt des Verwendens von Messungen der Signalstärke des Funksenders und des Ortes des Funksenders umfasst, um Ort, Größe und Leistung eines Spotbeams von einem GNSS-Satelliten (100, 102) zur Erhöhung der von einem durch Interferenz gestörten Empfänger empfangenen Signalstärke zu steuern.

9. Verfahren nach Anspruch 8, ferner **dadurch gekennzeichnet, dass** der Satellit ein erster Satellit (100) ist und das Verfahren das Verwenden mindestens eines weiteren GNSS-Satelliten (102) umfasst, wobei die Satelliten Hochgewinnantennen mit schmalem Strahlenbündel aufweisen, um auf den Ort (108) des Funksenders zentrierte Spotbeams (104, 106) zu erzeugen.

10. Verfahren zum Ableiten der Leistung eines Interferenz verursachenden Funksenders (10), die Vorrichtung umfassend eine Vielzahl von Messstationen (24, 28), von denen mindestens eine satellitenbasiert und mindestens eine luftfahrzeugbasiert ist, wobei die Messstationen (24, 28) so angeordnet sind, dass sie den Funksender orten, indem sie eine Methode zum Auffinden des Korrelationsmaximums durch Digitalisieren und Aufzeichnen der an der Vielzahl der Messstationen empfangenen Signale vor ihrem Korrelieren zueinander mit relativem Versatz in Bezug auf Zeit und Frequenz umsetzen, und **dadurch gekennzeichnet, dass** die Vorrichtung ferner ein Mittel für das Ableiten der Leistung als eine Lösung einer quadratischen Gleichung umfasst, welche Koeffizienten aufweist, die die Entfernungen des Funksenders von den Messstationen (24, 28), das Korrelieren der Verarbeitungsverstärkung sowie das Korrelieren des maximalen Signal-Rausch-Verhältnisses betreffen.

11. Vorrichtung nach Anspruch 15, **dadurch gekennzeichnet, dass** die quadratische Gleichung wie folgt lautet:

$$P_I^2 \left[ \frac{2TG_S{}^2 \left(\frac{\lambda}{4\pi D_1}\right)^2 \left(\frac{\lambda}{4\pi D_2}\right)^2}{SNR_C B(kT_N)^2} \right] - P_I \left[ \frac{G_S\left(\frac{\lambda}{4\pi D_1}\right)^2 + G_S\left(\frac{\lambda}{4\pi D_2}\right)^2}{kT_N B} \right] - 1 = 0$$

wobei

a) $P_1$ die Leistung des störenden Funksenders in W ist;
b) $G_1$ der Antennengewinn der Antenne des störenden Funksenders in dBi ist;
c) $D_1$ und $D_2$ die Entfernungen in m zwischen dem störenden Funksender und der jeweiligen der beiden Messstationen sind;
d) $\lambda$ die Signalwellenlänge des störenden Funksenders in m ist;
e) $G_s$ der Antennengewinn der Empfangsantenne einer jeden der beiden Messstationen ist (es wird ein gleicher Gewinn angenommen);
f) T eine Integrationszeit in s ist, d. h., die Zeitdauer, über die eine Korrelationsoperation als Teil eines Vorgangs des Ortens eines störenden Funksenders vorgenommen wird;
g) $k$ die Boltzmann-Konstante 1,380662 x $10^{-23}$ JK$^{-1}$ ist;
h) $T_N$ die Gesamtrauschtemperatur des bordeigenen Empfangssystems und der bordeigenen Antenne eines jeden Satelliten ist;
i) $SNR_c$ das Signal-Rausch-Verhältnis eines in der Korrelationsoperation erhaltenen Korrelationsmaximums ist, und
j) $B$ die Sample-Bandbreite in Hz am Empfänger- ADU-Ausgang jedes einzelnen Satelliten ist, wobei ADU eine Bezeichnung für Analog-Digital-Umsetzer ist.

12. Vorrichtung nach Anspruch 11, ferner **dadurch gekennzeichnet, dass** sie einen GNSS-Empfänger (16) umfasst, so angeordnet, dass er einem Benutzer Navigationsinformationen liefert und dem Benutzer eine Indikation der Störung durch einen Funksender anzeigt.

**13.** Vorrichtung nach Anspruch 12, ferner **dadurch gekennzeichnet, dass** sie angeordnet ist, um dem Benutzer eine Anzeige einer oder mehrerer geographischer Verbotszonen (82) zu liefern, in welchen der GNSS-Empfänger nicht mehr als wirksame Navigationshilfe dienen kann.

**14.** Vorrichtung nach Anspruch 12, ferner **dadurch gekennzeichnet, dass** der GNSS-Empfänger eine Navigationshilfe in einem ferngesteuerten unbemannten Fahrzeug ist.

**15.** Vorrichtung nach Anspruch 14, ferner **dadurch gekennzeichnet, dass** das ferngesteuerte unbemannte Fahrzeug ein Torpedo oder ein Flugkörper ist.

**16.** Vorrichtung nach Anspruch 10, ferner **dadurch gekennzeichnet, dass** sie einen GNSS-Satelliten (100) mit einem Spotbeam (104) umfasst, der einen Ort, eine Größe und eine Leistung aufweist, die in Reaktion auf Messungen der Leistung und des Orts eines Funksenders steuerbar sind.

**17.** Vorrichtung nach Anspruch 16, ferner **dadurch gekennzeichnet, dass** sie mindestens einen weiteren GNSS-Satelliten (102) umfasst, wobei die Satelliten (100, 102) Hochgewinnantennen mit schmalem Strahlenbündel aufweisen, um auf den Ort (108) des Funksenders zentrierte Spotbeams (104, 106) zu erzeugen.

## Revendications

**1.** Un procédé de dérivation de la puissance d'un émetteur (10) provoquant des interférences par géolocalisation de l'émetteur à l'aide d'une technique de détection du pic de corrélation mise en oeuvre par plusieurs stations de surveillance (24, 28), dont au moins une par satellite et une par avion, la technique de détection du pic de corrélation comprenant la numérisation et l'enregistrement des signaux reçus dans les diverses stations de surveillance (24, 28) avant de les corréler entre eux avec des compensations relatives en temps et en fréquence et **caractérisé en ce que** le procédé inclut la dérivation de la puissance comme une solution à une équation quadratique contenant des coefficients qui impliquent des distances de l'émetteur par rapport aux stations de surveillance, un gain de traitement par corrélation et un ratio signal du pic de corrélation sur bruit.

**2.** Un procédé selon la revendication 1 caractérisé également en ce que l'équation quadratique est la suivante :

$$P_I^2 \left[ \frac{2TG_S^2 \left( \frac{\lambda}{4\pi D_1} \right)^2 \left( \frac{\lambda}{4\pi D_2} \right)^2}{SNR_C B (kT_N)^2} \right] - P_I \left[ \frac{G_S \left( \frac{\lambda}{4\pi D_1} \right)^2 + G_S \left( \frac{\lambda}{4\pi D_2} \right)^2}{kT_N B} \right] - 1 = 0$$

où

a) $P_1$ désigne la puissance de l'émetteur d'interférence en W ;
b) $G_1$ désigne le gain en dBi de l'antenne de l'émetteur d'interférence ;
c) $D_1$ et $D_2$ désignent les distances en m entre l'émetteur d'interférence et deux stations de surveillance respectivement ;
d) $\lambda$ désigne la longueur d'onde du signal de l'émetteur d'interférence en m ;
e) $G_s$ désigne le gain d'antenne reçu de chaque station de surveillance (supposé être un gain égal) ;
f) $T$ désigne une durée d'intégration en s, à savoir la durée pendant laquelle l'opération de corrélation est effectuée dans le cadre d'un processus de localisation d'un émetteur d'interférence ;
g) $k$ désigne la constante de Boltzmann, 1,380662 x $10^{-23}$ JK$^{-1}$ ;
h) $T_N$ désigne une température de bruit totale du système et de l'antenne du récepteur embarqué de chaque satellite ;
i) $SNR_C$ désigne un ratio signal-bruit d'un pic de corrélation obtenu dans l'opération de corrélation ; et
j) $B$ est une bande passante d'échantillon en Hz à la sortie ADC du récepteur de chaque satellite, où ADC signifie *analogate to digital concerter* (convertisseur analogique-numérique).

**3.** Un procédé selon la revendication 1 ou 2 également **caractérisé en ce qu'**il inclut l'utilisation d'un récepteur de système de positionnement par satellite (GNSS) (16) pour fournir des informations de navigation à un utilisateur, et indiquant à l'utilisateur les interférences de l'émetteur.

**4.** Un procédé selon la revendication 3 également **caractérisé en ce qu'**il indique à un utilisateur une ou plusieurs zones géographiques de refus (82) dans lesquelles le récepteur GNSS cesse d'être un outil de navigation efficace.

**5.** Un procédé selon la revendication 3 ou 4 également **caractérisé en ce qu'**il inclut la détermination de la position, de la vitesse et de l'heure du récepteur et des informations de réduction des interférences en vue de réduire les effets des interférences en contrôlant les caractéristiques de réception du récepteur.

**6.** Un procédé selon l'une des revendications 3 à 5 également **caractérisé en ce que** le récepteur GNSS est un outil de navigation situé dans un véhicule sans pilote commandé à distance.

**7.** Un procédé selon la revendication 3 également **caractérisé en ce que** le récepteur GNSS est un outil de navigation situé dans une torpille ou un missile aéroporté.

**8.** Un procédé selon la revendication 1 également **caractérisé en ce qu'**il inclut l'étape supplémentaire d'utilisation de mesures de la puissance du signal de l'émetteur et l'emplacement de l'émetteur pour contrôler l'emplacement, la taille et la puissance d'un faisceau ponctuel issu d'un satellite GNSS (100, 102) en vue d'augmenter la puissance du signal reçu par un récepteur rencontrant des interférences.

**9.** Un procédé selon la revendication 8 également **caractérisé en ce que** le satellite est un premier satellite (100) et le procédé inclut l'utilisation d'au moins un autre satellite GNSS (102), les satellites disposant d'antennes à faisceau étroit et à gain élevé en vue de générer des faisceaux ponctuels (104, 106) centrés sur l'emplacement (108) de l'émetteur.

**10.** Appareil de dérivation de la puissance d'un émetteur (10) provoquant des interférences, l'appareil comprenant plusieurs stations de surveillance (24,28) dont au moins une par satellite et une par avion, le stations de surveillance étant disposées pour géolocaliser l'émetteur au moyen d'une technique de détection du pic de corrélation en numérisant et enregistrant les signaux reçus dans les diverses stations de surveillance avant de les corréler entre eux avec des compensations relatives en temps et en fréquence, et **caractérisé en ce que** l'appareil inclut également des moyens de dérivation de la puissance comme une solution à une équation quadratique contenant des coefficients qui impliquent des distances de l'émetteur par rapport aux stations de surveillance (24, 28), un gain de traitement par corrélation et un ratio signal du pic de corrélation sur bruit.

**11.** Appareil selon la revendication 15 **caractérisé en ce que** l'équation quadratique est la suivante :

$$P_I^2 \left[ \frac{2TG_s^2 \left( \frac{\lambda}{4\pi D_1} \right)^2 \left( \frac{\lambda}{4\pi D_2} \right)^2}{SNR_C B (kT_N)^2} \right] - P_I \left[ \frac{G_s \left( \frac{\lambda}{4\pi D_1} \right)^2 + G_s \left( \frac{\lambda}{4\pi D_2} \right)^2}{kT_N B} \right] - 1 = 0$$

où

a) $P_1$ désigne la puissance de l'émetteur d'interférence en W ;
b) $G_1$ désigne le gain en dBi de l'antenne de l'émetteur d'interférence ;
c) $D_1$ et $D_2$ désignent les distances en m entre l'émetteur d'interférence et deux stations de surveillance respectivement ;
d) $\lambda$ désigne la longueur d'onde du signal de l'émetteur d'interférence en m ;
e) $G_s$ désigne le gain d'antenne reçu de chaque station de surveillance (supposé être un gain égal) ;
f) $T$ désigne une durée d'intégration en s, à savoir la durée pendant laquelle l'opération de corrélation est effectuée dans le cadre d'un processus de localisation d'un émetteur d'interférence ;

g) $k$ désigne la constante de Boltzmann, 1,380662 x 10$^{-23}$ JK$^{-1}$ ;

h) $T_N$ désigne une température de bruit totale du système et de l'antenne du récepteur embarqué de chaque satellite ;

i) $SNR_C$ désigne un ratio signal-bruit d'un pic de corrélation obtenu dans l'opération de corrélation ; et

j) $B$ est une bande passante d'échantillon en Hz à la sortie ADC du récepteur de chaque satellite, où ADC signifie analogue to digital converter (convertisseur analogique-numérique).

12. Appareil selon la revendication 11 également **caractérisé en ce qu'**il inclut un récepteur GNSS (16) disposé pour fournir des informations de navigation à un utilisateur, et indiquer à l'utilisateur les interférences de l'émetteur.

13. Appareil selon la revendication 12 également **caractérisé en ce qu'**il est disposé pour indiquer à un utilisateur une ou plusieurs zones géographiques de refus (82) dans lesquelles le récepteur GNSS cesse d'être un outil de navigation efficace.

14. Appareil selon la revendication 12 également **caractérisé en ce que** le récepteur GNSS est un outil de navigation situé dans un véhicule sans pilote commandé à distance.

15. Appareil selon la revendication 14 également **caractérisé en ce que** le véhicule sans pilote commandé à distance est une torpille ou un missile aéroporté.

16. Appareil selon la revendication 10 également **caractérisé en ce qu'**il inclut un satellite GNSS (100) doté d'un faisceau ponctuel (104) dont l'emplacement, la taille et la puissance sont contrôlables en fonction de mesures de la puissance et de l'emplacement d'un émetteur.

17. Appareil selon la revendication 16 également **caractérisé en ce qu'**il inclut au moins un autre satellite GNSS (102), les satellites (100, 102) disposant d'antennes à faisceau étroit et gain élevé en vue de générer des faisceaux ponctuels (104, 106) centrés sur l'emplacement de l'émetteur (108).

# Fig.1.

# Fig.2.

'notch-out' and 'null-out' interferer

Demodulate.encrypted GNSS signal & extract navigation message

Display/exploit interference environment & mitigation information

Navigation data processing & any interferer data processing

# Fig.3.

Altered
vehicle
route
86

Original planned
vehicle route    80

84

82

Area effected by
interferer within which
the GNSS receiver
would fail

# Fig.4.

GNSS satellites
with increased
power-spot-beam
capability

100

102

104

106

110

# Fig.5.

EP 2 193 387 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5008679 A
- US 6018312 A
- US 6618009 B
- US 6677893 B

**Non-patent literature cited in the description**

- **P C CHESTNUT.** *IEEE Trans. on Aerospace and Electronic Systems,* March 1982, vol. AES-18 (2
- **S STEIN.** Algorithms for Ambiguity Function Processing. *IEEE Trans. on Acoustics Speech and Signal Processing,* June 1981, vol. ASSP-29 (3